Europäisches Patentamt

European Patent Office

Office européen des brevets

(11) Publication number: **0 258 415 B1**

(12) **EUROPEAN PATENT SPECIFICATION**

(45) Date of publication of patent specification: **02.12.92**  (51) Int. Cl.⁵: **A01K 29/00**

(21) Application number: **87901959.4**

(22) Date of filing: **24.02.87**

(86) International application number:
**PCT/US87/00415**

(87) International publication number:
**WO 87/04900 (27.08.87 87/19)**

(54) **SYRINGE-IMPLANTABLE IDENTIFICATION TRANSPONDER.**

(30) Priority: **25.02.86 US 832685**
　　　　　**25.02.86 US 832684**

(43) Date of publication of application:
**09.03.88 Bulletin 88/10**

(45) Publication of the grant of the patent:
**02.12.92 Bulletin 92/49**

(84) Designated Contracting States:
**AT BE CH DE FR GB IT LI LU NL SE**

(56) References cited:
**US-A- 3 964 024　　US-A- 4 065 753**
**US-A- 4 196 418　　US-A- 4 247 758**
**US-A- 4 262 632　　US-A- 4 532 932**
**US-A- 4 571 589**

(73) Proprietor: **DESTRON/IDI, INCORPORATED**
**2545 Central Avenue**
**Boulder, CO 80301(US)**

(72) Inventor: **TAYLOR, Vern**
**1282 Cedar**
**Broomfield, CO 80020(US)**
Inventor: **MILHEISER, Thomas**
**4977 E. Lake Avenue**
**Littleton, CO 80121(US)**
Inventor: **KOTUROV, Daniel, C.**
**Pinewood Springs**
**Lyons, CO 80540(US)**
Inventor: **BRADIN, John**
**1675 Dogwood Lane**
**Boulder, CO 80302(US)**
Inventor: **LOEB, Gerald, A.**
**15730 Comus Road**
**Clarksburg, MD 20871(US)**

(74) Representative: **Hackett, Sean James et al**
**Marks & Clerk 57-60 Lincoln's Inn Fields**
**London WC2A 3LS(GB)**

## Description

### FIELD OF THE INVENTION

This invention relates to identification transponders for implantation into animals for their identification, useful in monitoring migratory patterns and for other purposes. More particularly, this invention relates to an identification transponder which is passive, meaning that it receives all its operating power from an interrogator device, which is sufficiently small as to be implanted by a syringe, thus avoiding the necessity of a surgical procedure, and which, upon interrogation, provides a signal indicative of the identity of the particular animal, and which is durable and reliable over a period of years.

### BACKGROUND OF THE INVENTION

There are many applications in which a transponder which can be carried by an animal for automatic identification of the animal would be useful. Typical uses include monitoring migratory patterns of wild animals, for studying their habits, and for providing automatic identification of domestic animals, for controlling automatic feeding devices and the like, and for verifying their identity, e.g., in connection with racehorses. Automatically operated transponders would also be useful in connection with the monitoring of laboratory animals, for a wide variety of experimental purposes.

The prior art shows a number of transponders which provide identification of animals. However, no prior art device of which the inventors are aware includes all the attributes which would be desirable. See, for example, Fathauer U.S. Patent No. 3,541,995 which shows a transponder which can be affixed to an animal's collar or the like for identifying it as belonging to a particular class. The Fathauer device is relatively large and bulky and not suitable for identification of wild animals.

Particularly in connection with the tracking of the movements of wild animals, it is desirable that transponders be provided which are extremely small and which can be readily implanted in the animals. An implantable transponder offers the advantage that it is not susceptible to loss and does not impede the motion of the animal. In particular, it would be desirable to provide transponders which are implantable in animals without the requirement of surgical procedures. To this end, Jefferts et al. U.S. Patent No. 3,313,301 shows injection of a length of wire having magnetic properties into an animal by means of a syringe or generally similar device. See generally Jefferts et al. U.S. Patent Nos. 3,128,744, 4,233,964, 3,820,545 and 3,545,405.

The presence of an animal having had a sliver of wire implanted therein can be detected automatically by an inductive coil or the like; however, the animal cannot be specifically identified in such an arrangement. Thus, it is not possible to track the movements of an individual animal, but only of a large number of them. Jefferts et al. U.S. Patent No. 4,233,964 shows a similarly implantable tag which has grooves formed into its outer surface such that an individual animal can be identified by X-raying it and analyzing the groove pattern. This is obviously a very awkward system in use and does not lend itself readily to automatic monitoring of the movements of specific animals.

The prior art also includes transponders which provide an indication of the identity of a particular animal upon interrogation by an automatic interrogator device. Animal identification thus does not require operator intervention. See Hanton et al. U.S. Patent No. 4,262,632 which shows a transponder for retention in the second stomach of a ruminant animal. The Hanton et al. transponder is adapted to be interrogated by an interrogator, to receive all operating power from the interrogator by means of an inductive coupling, and to transmit an identification signal in response to the interrogation. Hanton et al. also teach that such a transponder can be suitably encapsulated in glass for durability, another important aspect of devices of this type. However, the transponder of Hanton et al. is stated to be approximately three-quarters of an inch (1.91 cm) in diameter by three inches (7.62cm) long. Such a transponder can only be implanted in an animal by a surgical procedure or by causing the animal to swallow it, e.g., by use of a conventional veterinary "bailing gun." Such a transponder is not suitable for use in connection with wildlife, since it would be unduly complicated to apply these procedures to a large number of animals, such as fish, whose migratory patterns are to be studied. Not only is the Hanton et al. transponder too large for convenient implantation by means of a syringe or an automatic machine such as shown in some of the Jefferts et al. patents, but it is physically too large to be implanted into a relatively small animal such as a fish, a laboratory mouse, or the like.

A need therefore exists in the art for a transponder which is small enough to be syringe- or machine-implantable into a relatively small animal such as a fish, yet which provides an identification of the individual animal when interrogated by a suitable interrogator, such that the movements of individual animals can be studied by means of interrogators which record the animal's position without the intervention of a human operator.

It is therefore an object of the invention to provide a transponder which provides identification of an individual animal when it is interrogated, yet which is small enough to be syringe- or machine-implantable into an animal such as a fish.

It will be appreciated by those of skill in the art that it is important that a transponder for animal identification be durable in service, and it is accordingly an object of the invention to provide a transponder which is durable and reliable in service over a period of years, yet which is syringe-implantable and which provides an identification of the specific animal when interrogated.

Certain prior art transponders have relied on batteries for transmission of the identification signal. Other prior art transponders are powered by the interrogator itself by way of an inductive coupling. This is shown in Hanton et al. However, no reference known to the applicants shows a syringe-implantable transponder which is adapted to be powered by means of an inductive coupling to an interrogator, nor one in which the transponder additionally transmits an identification of an individual animal, and to provide the same is therefore an object of the present invention.

It is an important object of the present invention to provide a system for the monitoring of the movements of individual, small animals, for studying their migration patterns and the like, in which recordation of the movements of individual animals is possible and in which the data recording the movement of the individual animals is compiled without operator intervention.

Apart from the fact that prior art transponders which transmit identification signals are too large to be useful in connection with small animals, if they are to be used in connection with animals other than ruminants, they must be implanted surgically.

One of the significant drawbacks of surgical implantation of transponders is cost. A further disadvantage is the likelihood of infection, particularly in the case of wild animals or pets which are desirably released immediately after the surgery. Surgery also disfigures the animal to some extent, which is undesirable in the case of valuable animals. Surgery is psychologically traumatic to owners of domestic animals. For similar reasons, identification of the animals by ear tags and the like, which is generally within the prior art, is undesirable in the case of valued domestic animals and pets. Such external devices are also subject to loss.

For all these reasons, the art seeks a new identification transponder which is implantable by syringe or the equivalent, without surgical procedures, such that the transponder can be implanted in a simple and speedy manner, in which the chance of infection is greatly reduced, as compared to surgical implantation, in which the disfigurement of the animal is limited to an imperceptible pin prick, as compared to a scar left by surgery or the consistent undesired presence of an ear tag or the like. To eliminate these difficulties and deficiencies of the prior art in favor of simple syringe implantation of a transponder which nevertheless is durable in service, which does not require a battery, and which provides an identification of the individual animal are therefore important objects of the invention.

As mentioned above, the prior art also shows machinery for automatically implanting identification tags into animals such as fish. See Jefferts Patent No. 3,820,545 and Debrotnik. et al. Patent No. 3,369,525. While such machinery would appear to have some utility, it is considered desirable to provide a transponder which is implantable using a relatively conventional syringe, which is less bulky and better suited for use in the field. In particular, it is an object of one aspect of the invention to provide a conveniently prepackaged, sterile cannula and identification transponder combination, such that the individual implanting the transponders into animals can be provided with all the equipment needed in a single sterile package which is used on a one-time basis; the cannula then being simply disposed of. In this way, sterility is ensured and operator convenience is optimized.

## SUMMARY OF THE INVENTION

According to the present invention there is provided a transponder adapted to be syringe-implanted in an animal and, when implanted, to be inductively coupled to an interrogator transmitting an alternating interrogation signal, comprising: a coil for inductive coupling to the interrogator and for transmitting an identification signal; an integrated circuit connected to said coil; and a non-porous encapsulation member suitably sealing said coil and said integrated circuit for syringe implantation in an animal; the integrated circuit including means for storing an identication code, means for transmitting an identification signal substantially instantaneously upon detection of the interrogation signal and rectifying means for converting the alternating interrogation signal transmitted by said interrogator and received by said coil to a suitable form for powering of the circuit in conjunction with the parasitic capacitance of the integrated circuit, whereby said transmission of the identification signal can be accomplished without a discrete energy storage device.

In embodiments of the invention, the coil serves as a receiving antenna for receiving the interrogation signals to activate the transponder and for receiving power for its operations. The same antenna is used to transmit the identification signal. The integrated circuit may be a single complementary metal-oxide-semiconductor (CMOS) chip provided to perform all circuit functions, including detection of the interrogation signal, conversion of the received signal to DC for powering of the transmitter operations, storage and provision of the identification code, generation of the transmission signal frequency, and modulation of the transmitted signal in accordance with the code and its transmission. The circuit transmits in real time, such that no discrete energy storage device is required; parasitic capacitance intrinsic to the CMOS chip is sufficient. The circuit divides, the interrogation signal frequency by plural divisors to generate two frequencies which are used to provide a frequency-shift-keyed output signal, the transmission frequency varying in accordance with the stored identification signal. The transponder may be encapsulated in glass or a similarly durable material and in the preferred embodiment is 10mm (0.40") long and 2mm (0.080") in diameter. It may be supplied together with a disposable cannula for convenient syringe implantation into an animal. Together with essentially conventional interrogator and data storage equipment, a complete animal monitoring system is provided, suitable for monitoring migratory movements of wild animals as well as laboratory animals, pets and livestock.

**BRIEF DESCRIPTION OF THE DRAWINGS**

The invention will be better understood if reference is made to the accompanying drawings, in which:

Figure 1 shows an overall system for monitoring the movements of migratory fish;

Figure 2 shows a preferred sterile package for transponder implantation, including the transponder of the invention, together with a disposable, sterile cannula;

Figure 3 shows in schematic form a cross-sectional view of a hypodermic syringe, together with the cannula/transponder assembly of Figure 2, and illustrating how this assembly may be used to inject the transponder into a fish or the like without the necessity of a surgical procedure;

Figure 4 shows a cross-sectional view of the transponder assembly according to the invention;

Figure 5 shows a plan view of the active components of the transponder of the invention;

Figure 6 shows a side view of the active components of the transponder of the invention;

Figure 7 shows an end view of the active components of the transponder of the invention;

Figure 8, comprising Figures 8a-8e, shows certain alternative arrangements of the active elements of the transponder of the invention;

Figure 9 shows the data encoding and communications format employed in the preferred embodiment of the invention;

Figure 10 shows a block diagram of the interrogator and transponder circuits according to the invention, as well as certain monitoring system components;

Figure 11 shows a logic-level diagram of the transponder circuitry according to the invention;

Figure 12 shows a detailed schematic diagram of the rectification and regulation circuitry used, and that of a Schmitt trigger circuit employed in the transponder of the invention; and

Figure 13 details the programmable array circuit which stores the identification code.

**DESCRIPTION OF THE PREFERRED EMBODIMENTS**

As mentioned above, one of the objects of the invention is the provision of a transponder useful in a monitoring system for monitoring the movements of migratory animals such as fish. Large migratory populations require that the transponders used be relatively simply made, for reasons of cost and reliability, and very readily implantable. A further object of the invention is to provide such a monitoring system in which the movements of individual animals can be detected. This requires that the transponder provide an identification of the individual animal, not merely provide a signal which is indicative of the presence of an animal having had a transponder implanted.

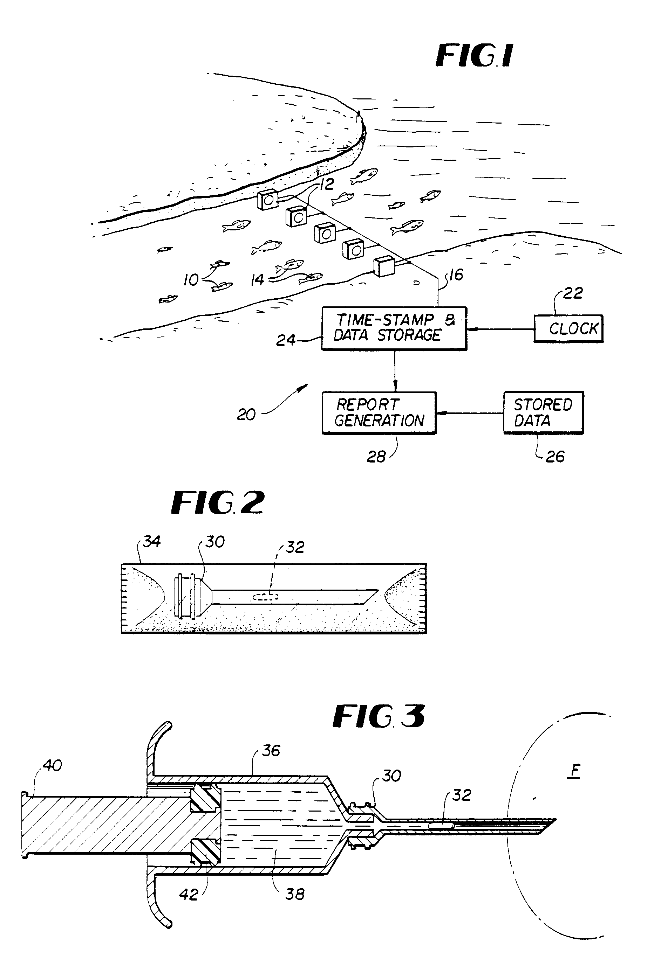

Figure 1 shows the main components of the monitoring system. A school of fish 10 is shown passing between a number of interrogators 12. Some fraction of the fish have transponders indicated generally at 14 implanted therein. The interrogators continually transmit an interrogation signal, which may be a simple constant frequency sine wave. When the fish having transponders implanted therein swim between the interrogators 12, energy is inductively coupled to the transponders 14, which thereupon transmit an identification code indicative of the identity of individual fish. These signals may be multiplexed and passed over a cable 16 to data processing apparatus indicated generally as 20. This may comprise a clock 22 and a time stamp and data storage device 24 for associating the identification of a fish with the time at which the fish passed the interrogator 12. The location of the interrogator would ordinarily be part of the overall data record produced as well. This information could be combined with data indicative of prior movements of the individual fish, stored as indicated at 26, and with the location at which the fish were originally supplied with transponders. Report generation means 28, typically an appropriately programmed digital computer, is then enabled to correlate this data in order to provide a report indicating the movement of the fish.

As shown in Figure 1, a number of interrogators 12 are provided, and they are disposed in a relatively narrow channel. It will be appreciated that the interrogators are shown in schematic form. One preferred form of interrogator comprises a tube through which fish are constrained to swim in migratory movements, such as salmon migrating upstream to spawn, during which they are obliged to climb "ladders." The tubes can have inductive coils wrapped around them, continually emitting energy. When a salmon having a transponder implanted therein swims through the tube, the interrogator causes the transponder to transmit an identification of the fish, which can then be stored in time stamp and data storage unit 24 and used for subsequent report generation by report generator 28.

The report generator 28 can be of a wide variety of types, selected, for example, in accordance with specific research needs. For example, it might be desirable to determine to what extent individual salmon return to the rivers in which they were born for spawning. If individual salmon are captured and tagged with transponders capable of transmitting their individual identities in a given year, their subsequent return could be detected automatically by the system shown in Figure 1. This may be instructively compared to a system in which a fish is tagged with a symbol which is readable by an operator. This requires that the operator capture the fish a second time to read the tag. According to the system shown in Figure 1, the operator need only capture the fish a first time, at which time a transponder is syringe-implanted into the animal; thereafter, data generation and report generation may be entirely automated.

As discussed above, the prior art shows a number of transponders, some of which, such as those shown in the Hanton et al. patent, are capable of transmitting an identification signal indicative of the identity of a particular animal. However, all prior art transponders having this capability known to the applicant are far too large to be implanted in small animals such as fish and require surgical implantation or swallowing by the animal. Surgical implantation poses many difficulties. Expense is paramount; however, another difficulty is posed by the likelihood of infection, particularly where the animal is returned to the wild immediately after the implantation, which is, of course, highly desirable if at all possible. According to one aspect of the invention, there is provided a transponder which is syringe implantable. This avoids the trauma associated with surgery, and the wound in the animal is so small that infection is rendered substantially less likely. Moreover, syringe implantation avoids scarring or disfigurement of domestic animals, and is thus far less traumatic for both domestic animals and their owners than surgery, and is much less disfiguring, of course, than would be the adding of an ear tag or the like.

In order to reduce the expense of implanting transponders, operator convenience should be maximized, without compromising the goals of sterility and minimization of trauma to the animal. Figure 2 shows a combination of a sterile cannula 30 with a sterilizable transponder 32 according to the invention, and as discussed in detail below, supplied already located within the tubular portion of the cannula. As shown, the cannula 30 with the transponder 32 packed therein can both be supplied together in a sterile package 34; this clearly will maximize the convenience of the operator, who needs merely to open the package 34, attach the ferrule of the cannula to a syringe, inject the transponder and throw the cannula away.

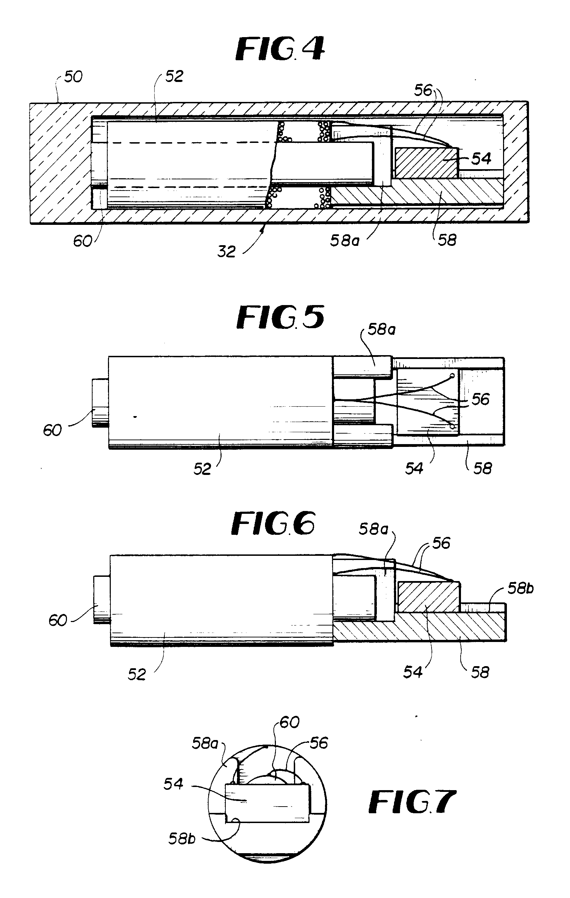

Figure 3 shows the assembly of the cannula 30 with the transponder 32 therein having been assembled to a syringe 36. A fluid 38, which may be antiseptic and/or antibiotic, may be used to force the transponder 32 into an animal such as a fish shown in phantom at F, simultaneously impelling the transponder into the animal and sterilizing the wound, such that the chance of infection is substantially minimized. In other respects, the syringe is conventional, comprising a plunger 40 moving a piston 42 to urge the fluid 38 and hence the transponder 32 into the animal upon depressing thereof by the operator.

It will be appreciated that Figure 3 is to be considered schematic and not as a limitation on the invention. Specifically, the syringe may also simply urge the transponder 32 into the animal F by means of a rod, attached to the plunger 40, eliminating the fluid 38. Other forms of implantation are also possible, including the provision of a number of cannula/transponder assemblies in a magazine supplied to an automatic-loading injection device. Use of the term "syringe-implantable" or the equivalent herein and in the appended claims should therefore not be taken to limit the invention to the precise arrangement shown in Figure 3.

Figure 4 shows a partly cross-sectional view of the transponder 32 according to the invention. It comprises an outer encapsulating member 50 which may be formed of glass, a coil 52, an integrated circuit chip 54, leads 56 connecting the chip 54 to the coil 52, and a support member 58. The coil 52 is wound upon a coil former 60. Glass encapsulation is preferred because glass is non-porous, corrosion-resistant, and amenable to sterilization, as compared to other possible encapsulation materials such as plastic. Glass encapsulation of transponders is generally within the skill of the art; see U.S. Patent No. 3,935,612 to Fischer et al.

As discussed above, it is important to the achievement of the objects of the invention that the transponder 32 be small enough physically to be implantable by means of a syringe, in order to avoid surgical procedures. The assembly shown in Figure 4 is of outside diameter between 2.025 -2.075mm (.081-083 inch), and is approximately 10.125mm (.405 inch) long. The coil 52 comprises 1,200 turns of 50-gauge aluminum wire, the conductor of which is 25 $\mu$m (.001 inch) in diameter. The coil former 60 is formed of ferrite and is approximately 0.75mm (.030 inch) diameter by approximately 5mm (.20 inch long). The result is a coil of approximately 6,500 microhenry inductance at the preferred interrogation frequency of 400 kHz, and having a DC resistance of approximately 250 ohms. The outside diameter of this coil 52 is approximately 1.575mm (.063 inch), and it fits within the encapsulating housing with a small amount of room to spare, as shown. The coil is suitable for both detecting the interrogation signal and for transmitting the identification signal.

The integrated circuit chip 54, the circuitry of which is discussed in detail below, is 1.13mm (0.045 inch) square. It is a completely self-contained unit and contains all the circuitry necessary to perform the transponder functions, including responding to the interrogation signal, storing an identification code, reading back the code when interrogated, generating appropriate signal frequencies for frequency-shift-keyed transmission of the code to the interrogator, and providing the appropriate identification signal sequence. In particular, no storage capacitor and no crystal oscillator or other discrete circuit elements are required.

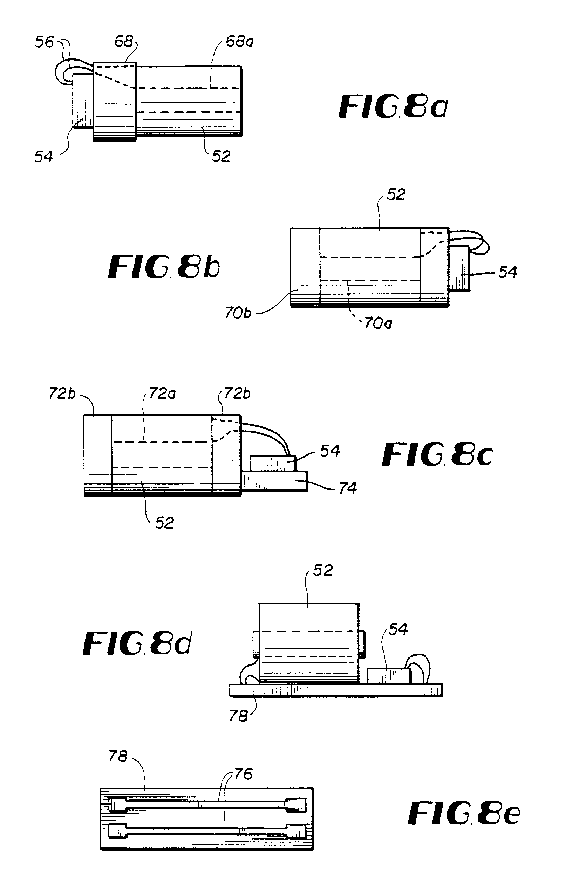

Figure 5 shows a plan view of the coil/chip/carrier assembly, with the encapsulating glass member 50 removed. Figure 6 shows a side view of the coil/chip/carrier assembly, and Figure 7 shows an end view. As can be seen, the entire connection of the coil 52 to the chip 54 is made by the two leads 56. These both carry power received from an interrogator by way of an inductive coupling to the coil 52 to the chip 54, and carry the identification signal from the integrated circuit 54 back to the coil 52 for transmission to the interrogator.

As can be observed, the carrier 58 comprises two upstanding ears 58a which are generally circular in their peripheral shape so as to fit within a circular glass tube used to form the encapsulating member 50. The carrier 58 is shaped to receive the integrated circuit chip 54 in a recess 58b formed therein, and the upstanding ear members 58a are shaped to receive the generally cylindrical coil former 60, all generally as shown in Figure 7.

Note that while a transponder of cylindrical shape, 10mm (0.400 inch) long and 2mm (.080 inch) OD has been described, other shapes and somewhat larger or smaller sizes would presumably also be useful. It is believed however that the transponder to be suitably syringe-implantable should be no more than about 12.5mm (.5 inch long) and should have a cross-sectional area of not more than about .01 square inches. (The 2mm (.080 inch) OD transponder of the invention has a cross-sectional area of approximately 1.77sqmm (.005 square inches)). The invention should therefore not be limited to the precise embodiment shown.

Figure 8, comprising Figures 8a-8e, shows a number of additional arrangements for the active elements of the transponder of the invention. In Figure 8a, the integrated circuit chip 54 is mounted on a carrier 68 which desirably will be integrally formed with the coil former 68a so as to eliminate a part. The leads 56 connect the chip to the coil 52 as shown.

Figure 8b shows an additional variation on the embodiment shown in Figure 8a, in which the coil former 70a is generally cylindrical and has a center section of reduced cross-sectional dimension and larger end members 70b. The integrated circuit chip 54 is attached to one of the end members 70b.

Figure 8c shows yet another variation on this concept, in which the coil former again has a center section 72a of reduced cross-sectional area and larger ends 72b; in this case, the integrated circuit 54 is mounted on an extension member 74, which could be integral with the coil former 72 or be a separate piece, as desired.

Figures 8d and 8e show, respectively, side and bottom views of yet another possible embodiment of the invention. In this case, the connection from the coil 52 to the integrated circuit 54 is made by way of two conductive "traces" 76 formed on one side of a circuit board 78 to which are mounted the coil 52 and integrated circuit 54. The circuit board material could be chosen from a wide variety of suitable materials, including glass, ceramics, plastics and epoxy.

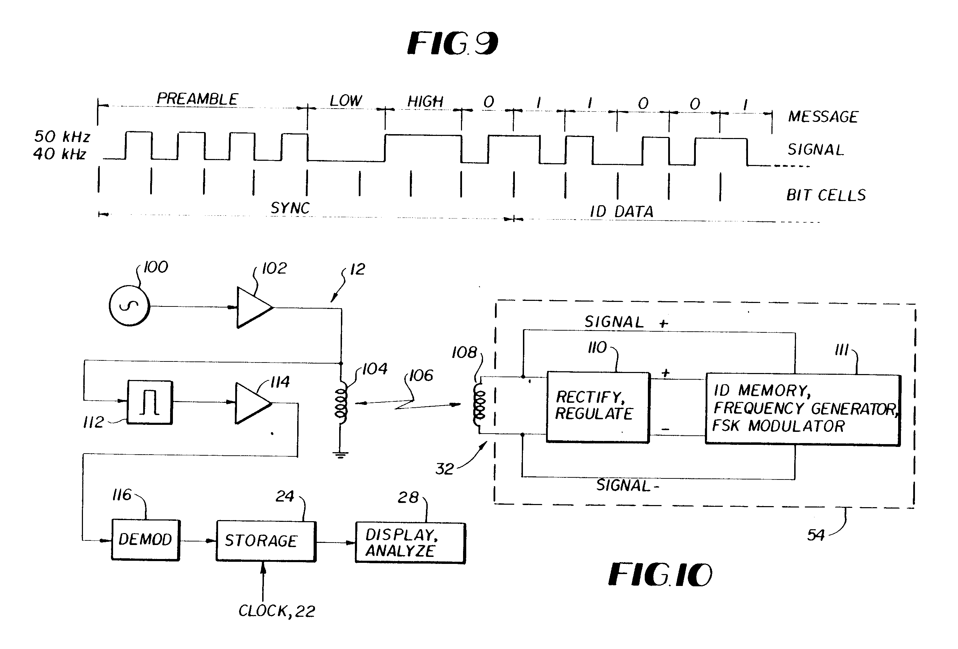

In the preferred embodiment of the invention, the signal by which the transponder transmits an identification code identifying the particular transponder and hence the animal into which it is implanted, is in a conventional frequency-shift-keyed, Manchester encoded format. The communications format is shown in Figure 9, which illustrates, on the line marked "Signal" the frequency of the signal transmitted by the transponder and detected by the interrogator. The signal includes a synchronization portion, marked "Sync", and an identification data portion, marked "ID data." The sync portion includes a preamble which includes four identical bits, a low portion during which the frequency stays low for a period longer than the bit cells, as indicated, a similar high portion, and a zero data bit. The actual identification code begins thereafter as indicated. For example, five data bits, encoding the sequence "11001..." are shown. As indicated, the Manchester encoding scheme is implemented such that for a "one" bit, the transmission frequency changes from the higher frequency to lower during the bit cell; the converse is true for a "zero" bit.

In the preferred embodiment, the interrogation frequency is 400 kHz, and the two identification signal transmission frequencies are 40 and 50 kHz. The integrated circuit 54 comprises means for selectively dividing the interrogation frequency by 8 and 10, to arrive at the desired frequency of the identification signal. Other interrogation frequencies and divisors are within the scope of the invention.

Figure 10 shows in block diagram form the circuitry of the transponder, indicated generally at 32, and that of the interrogator, indicated generally at 12, together with storage device 24, clock 22 and display generation device 28, generally as shown in Figure 1. The interrogator circuitry is substantially as disclosed in commonly assigned copending application Serial No. 814,492, filed December 30, 1985, now US patent 4,730,188 incorporated herein by reference. Briefly stated, the interrogator 12 comprises a signal source 100 which generates a sine wave of 400 kHz, and an amplifier 102. The interrogation signal is supplied to the interrogator coil 104, which transmits it as indicated at 106 to coil 108 (corresponding to coil 52 of Figures 4-8) whereupon the interrogation signal is inductively coupled to the transponder 32. The interrogation signal received by coil 108 is supplied to a single integrated circuit 54 in which it is rectified and regulated as indicated at 110, supplying DC voltage for the remaining functions of the chip 54, as indicated at 111. The other function of the chip 54 as noted are to store the identification of the individual transponder, to generate signals of suitable frequency for transmission of the identification code, and to modulate the transmission frequency in accordance with the stored code and according to the frequency-shift-keyed Manchester encoded format shown in Figure 9. Chip 54 provides "Signal +" and "Signal -" signals which are supplied to and transmitted by the coil 108 as indicated at 106. The identification signal is received by the coil 104 in the interrogator. The received identification signal is supplied to a bandpass filter 112 to remove any vestige of the interrogation signal. The bandpass-filtered identification signal is then amplified at 114, and is demodulated at 116. This provides an identification of the animal, which can then be stored at 24, together with a time stamp from clock 22, indicating the time at which the animal passed by the interrogator. Subsequently, this data can be supplied to display and analysis unit indicated generally at 28 for any desired purpose.

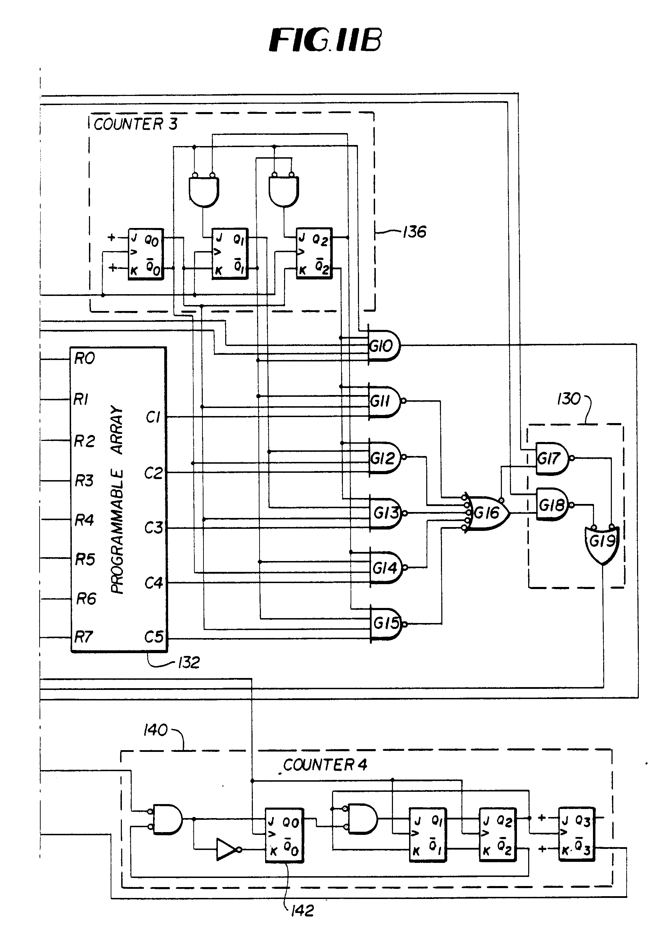

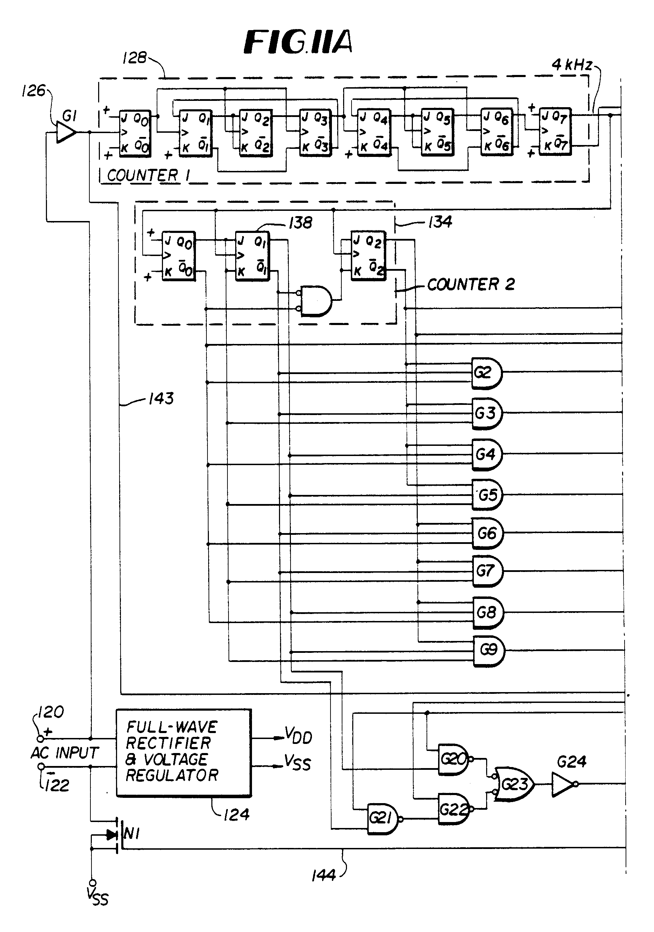

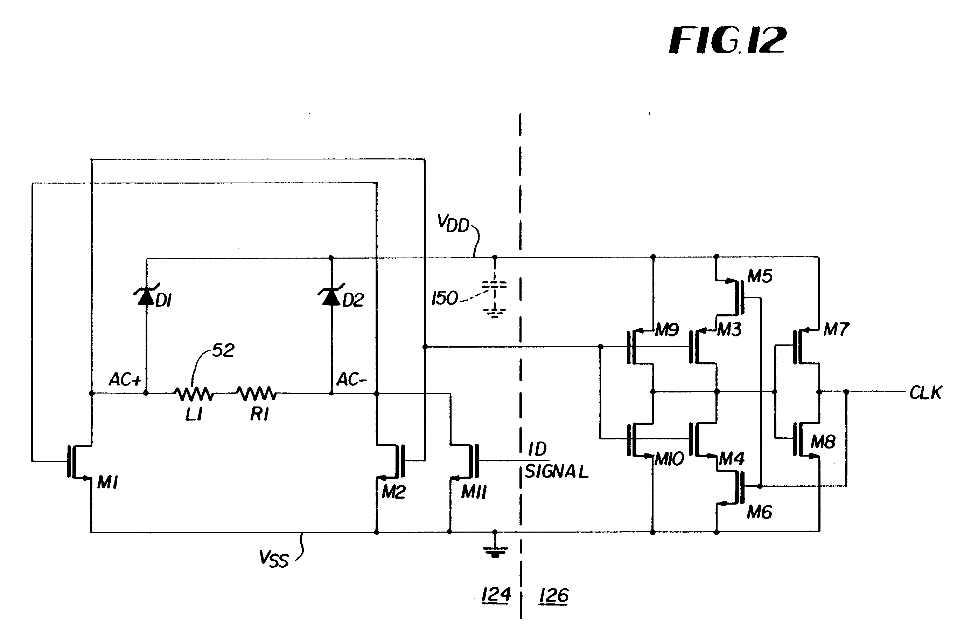

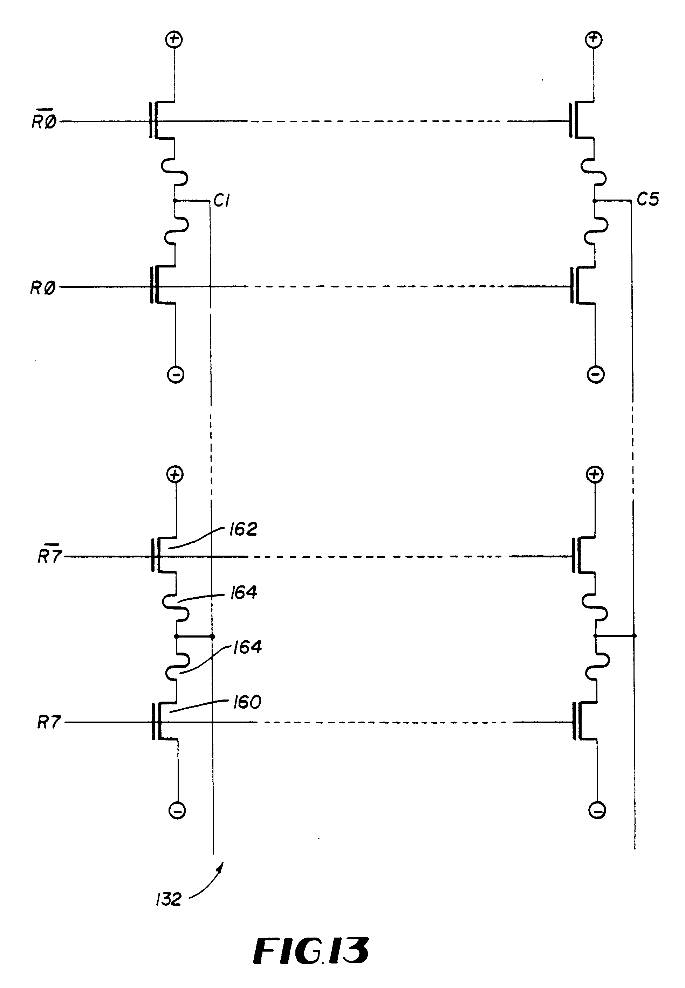

Figure 11 shows a logic diagram of the circuit of the transponder according to the invention. The circuit shown in Figure 11 shows logic gates and other circuit elements which, as will be understood by those of skill in the art, are readily implementable on a single integrated circuit chip by selecting the desired items from a "cell library" and making appropriate interconnections. Implementation of the circuit shown in Figure 11 in a single integrated circuit is therefore considered to be within the skill of the art at this time; however, figures 12 and 13 disclose in further detail certain circuit elements which may be of use in understanding the implementation of the invention.

The circuit shown in Figure 11 is connected to the coil at terminals 120, 122, marked "AC Input." The AC input signal, of course, is the 400 kHz interrogation signal generated by the interrogator 12 of Figure 10. This signal is rectified and voltage-regulated at 124 resulting in generation of steady DC at points $V_{DD}$ and $V_{SS}$. The AC input frequency signal is also supplied to a Schmitt trigger circuit 126 which, as understood by those skilled in the art, suppresses clock jitter on the rising edge of the AC power waveform. The rectifier/regulator 124 and the Schmitt trigger 126 are detailed in Fig. 12. The output of Schmitt trigger circuit 126 is supplied to a first counter circuit 128 which comprises a number of J,K flip-flops connected as shown to divide the input signal by 100, in order to generate a 4 kHz output signal. This output signal defines the bit cells during which the individual bits of the identification signal shown in Figure 9 are transmitted, and is supplied to several logic gate elements which as connected comprise a Manchester encoder 130, all as will be readily understood by those of skill in the art.

The identification code is stored in a 40 bit programmable array 132, which is detailed below in connection with Figure 13. It has supplied to it eight inputs R0-R7; these are sequenced by a second counter 134 comprising a number of J,K flip-flops connected as shown, in conjunction with a number of logic gates G2-G9. When the logic comprising gates G2-G9 and counter 134 together provide appropriate inputs to the 40-bit array 132, selecting one of eight rows each storing five bits, the five bits of identification code stored on the selected row are output on lines C1-C5. One of these five bits is then selected by gates G11-G15 which are themselves sequenced by a third counter 136. The third counter 136 also provides the preamble information shown in Figure 9; as this is the same with respect to all transponders, it is hard-wired as shown. By comparison, the identification signal stored in gate array 132 varies from transponder to transponder, in order to provide identification of the individual animal.

The outputs of gates G11-G15 are supplied to gate G16 which combines and buffers them and supplies them to the Manchester encoder 130. The output signal from Manchester encoder 130 is supplied to gate G22 which receives as its other input the $\overline{Q}_1$ output of flip-flop 138 of the second counter 134, clocked by gate G21. The $Q_1$ and $\overline{Q}_1$ outputs of flip-flop 138 determine whether preamble or identification information is being sent at any given time; $Q_1$ from 138, by way of gate G20, controls the flow of the preamble information, supplied to G20 from the third counter 136 by way of gate G10. Gates G20 and G22 therefore gate the preamble and identification information respectively to gates G23, G24 and thence to a fourth counter 140. Counter 140 divides the input signal, received from the Schmitt trigger 126 on line 143, by either 8 or 10, depending on the input to flip-flop 142, which toggles the divisor between 8 and 10 in dependence on the value of the signal output by gate G24. Accordingly, the data supplied by gate G24 controls the frequency of the signal output by counter 140 on line 144 to be between 40 and 50 kHz, in accordance with the Manchester encoded frequency-shift-keyed identification signal format described above in connection with Figure 9. This signal is supplied to output driver N1 which then supplies the identification signal to the coil, which is connected to terminals 120, 122 as discussed above. Given that the logic of the circuit is fully shown in Figure 11, it is believed that additional operational details of the transponder circuit will be readily apparent to those of skill in the art.

Figure 12 shows in detail the circuitry of the full wave rectifier and voltage regulator 124, and the circuitry of the Schmitt trigger circuit 126, both shown in block diagram form in Figure 11. Figure 12 also shows the coil 52 and its connection to the remainder of the transponder circuitry explicitly. As shown in Figure 12, coil 52 is connected in the center of a full wave bridge rectifier formed by diodes D1 and D2 and N-channel devices M1 and M2, so that a DC voltage is generated between points $V_{DD}$ and $V_{SS}$ as shown. Diodes D1 and D2 are Zeners, as shown, to provide voltage regulation, while M11 is the output driver (N1 in Fig. 11).

The Schmitt trigger circuitry 126 comprises transistors M3-M10 which are connected as shown, in a conventional CMOS Schmitt trigger implementation. The output signal is identified as "CLK"; this is the signal input to the first counter 128 and to the flip-flop 142 of Figure 11.

As shown in phantom at 150, a capacitance exists between $V_{DD}$ and $V_{SS}$. The showing of this capacitance in phantom is meant to indicate that the capacitance is not provided by a discrete circuit element but is the parasitic capacitance which exists as an unavoidable incident of the use of CMOS circuitry. According to an important aspect of the invention, a discrete capacitance is not specifically required for energy storage for transmission of the interrogation signal, because the transponder of the invention responds essentially in real time to the detection of an interrogation signal, and therefore does not need to store energy for subsequent transmission. This is in comparison, for example, to the large discrete capacitor required in the Hanton et al. patent discussed above. The parasitic capacitance 150 aids in smoothing the transitions of the output signal from the bridge rectifier formed by diodes D1-D2 and transistors M1 and M2, and in retaining charge between $V_{DD}$ and $V_{SS}$ during the zero crossings of the AC power signal. Again, it is believed that detailed understanding and implementation of the circuitry shown in Figure 12 is well within the skill of the art.

Figure 13 shows the programmable array 132. As discussed above, the array comprises storage for 40 bits of identification code. Each of the bits is stored in an individual cell, each comprising two transistors. The 40 cells are arranged in an 8-by-5 matrix, the corner elements of which are shown in Figure 13. As indicated, each of the cells comprises two transistors 160, 162 each of which is connected by a fusible link 164 to one of five common bus lines denoted C1-C5, while the gates of the transistors are each connected to one of positive and negative row select lines $\overline{R0}$-R7. Each of the transistors 160, 162 of each cell is connected to a source of positive or negative potential. Bits are stored in the cells by "blowing" one or the other of the fuses 164 of each cell, either by applying an overvoltage thereto or by laser vaporization or the equivalent. Thereafter, each cell can pass only positive or negative voltage when interrogated by connection to one of the row select lines $\overline{R0}$-R7 and one of the column select lines C1-C5. Thus, interrogation of the programmable array 132 is accomplished by sequentially connecting $\overline{R0}$-R7 and C1-C5; after each of the 40 possible combinations has been addressed, the entire interrogation signal will have been read out of the array 132. Again, it is believed that detailed understanding of the operation of the array 132 and its implementation are well within the skill of the art. Note that at any given moment, when one of the row select lines $\overline{R0}$-R7 are selected, there will be five outputs, one on each of the column select lines C1-C5; that which corresponds to the cell being interrogated is selected by the gates G11-G15, operation of which is sequenced by the counter 136 (Figure 11).

The transponder of the invention now having been described in detail, a number of its advantages over the prior art discussed above can now be more fully explained.

As described above, it is highly desirable that a transponder comprising means for transmitting an identification of a specific animal be provided which is small enough to be syringe implantable. The present transponder meets this goal. There are several aspects of its design which make this possible. As compared with the transponder shown in the Hanton et al. patent discussed above, which also transmits an identification of a specific animal when interrogated, applicants' device makes possible a dramatic size reduction from the 18.75mm (0.75 inch) OD by 75mm (three inch) long device of Hanton et al. to the 10mm (.40 inch) long by 2mm (.080 inch) OD transponder. This is done according to the present invention by eliminating a number of discrete circuit elements. Note in particular that Hanton et al. describe their transponder as including a capacitor for storage of energy received by way of inductive coupling to an interrogator for a time until suffi-; cient energy is present. Hanton et al. disclose that a capacitor of approximately 1,000 microfarads at 6 volts capacity is required. Those skilled in the art will recognize that such a capacitor is typically much larger than applicants' entire transponder. By making a circuit which transmits in real time, that is, substantially immediately upon commencement of interrogation, applicants avoid the need to store substantial quantities of energy, and are enabled to eliminate the discrete capacitor as a circuit element. The circuit described begins transmission of the identification signal after the interrogation signal has been divided by 100 in the first counter 128; if the interrogation signal is 400 kHz, 250 usec after initiation of interrogation. Implementation of applicants' circuit in CMOS technology also enables reduction in total power required, due to that circuit family's generally low power requirements. It will also be appreciated that applicants' system need only transmit a signal over a distance on the order of inches to be functional in applications such as fish migration monitoring, because the fish can be constrained to pass through a relatively small tube or weir in a fish ladder. By comparison, Hanton et al.'s device transmit the identification signal over distances on the order of several feet, which naturally requires more power and substantial energy storage capacity.

The device of Hanton et al. also preferably includes a crystal oscillator for generation of the identification signal. It will be appreciated by those skilled in the art that crystal oscillators generally are not capable of fabrication on the same chip as an ordinary integrated circuit, such that plural discrete components are required. Applicants avoid this by generating their two transmission frequencies by integer division of the interrogation signal in circuit elements formed on the integrated circuit itself. In this way, the requirement of an additional discrete circuit element is avoided in favor of utilization of logic gates fabricated on the chip itself. It will be appreciated that applicants also derive their bit cell timing signal from the interrogation signal by integer division thereof, thus further simplifying this aspect of the device and eliminating additional parts which might be required in other implementations.

Another advantage of applicants' circuit is provided by the fact that the device both receives power and transmits over the same antenna, coil 52, and does so simultaneously. This allows a single coil to serve plural purposes. Transmission of the identification signal at frequencies substantially different from that of the interrogation signal is required to permit this. This in turn requires avoiding use of LC or RC circuits for setting the transmission frequencies. The fact that this can be avoided is another advantage of applicant's use of integer division to generate the transmission frequencies. Other important aspects of the invention will no doubt appear to those skilled in the art.

While a preferred embodiment of the invention has been described, numerous modifications and improvements can be made thereto without departure from its essential spirit and scope. The above disclosure of the invention should be considered exemplary only and not as a limitation on the invention, which is limited only by the following claims.

**Claims**

1. A transponder (32) adapted to be syringe-implanted in an animal and, when implanted, to be inductively coupled to an interrogator (12) transmitting an alternating interrogation signal, comprising:

a coil (108;52) for inductive coupling to the interrogator and for transmitting an identification signal;

an integrated circuit (54) connected to said coil; and a non-porous encapsulation member (50) suitably sealing said coil and said integrated circuit for syringe implantation in an animal;

the integrated circuit including means (132) for storing an identification code, means for transmitting an identification signal substantially instantaneously upon detection of the interrogation signal and rectifying means (110; D1, D2) for converting the alternating interrogation signal transmitted by said interrogator and received by said coil to a suitable form for powering of the circuit in conjunction with the parasitic capacitance of the integrated circuit, whereby said transmission of the identification signal can be accomplished without a discrete energy storage device.

2. The transponder of claim 1, wherein said integrated circuit (54) comprises means (136) for generating an identification signal transmission frequency by integer division of the frequency of the interrogation signal.

3. The transponder of claim 2 wherein the encapsulation member is of glass.

4. The transponder of claim 2 or 3, wherein said encapsulation member (50) is not more than approximately 12.5mm (0. 5 inches) long and has a cross-sectional dimension of not more than approximately 6.25 so mm (0.01 square inches).

5. The transponder of any of claims 1 to 4, wherein said coil (108;52) is arranged for receiving an interrogation signal of a specified first frequency and for transmitting an identification signal at a substantially different second frequency; and wherein said integrated circuit (54) is arranged for generating an identification signal responsive to detection of said interrogation signal and in accordance with said stored identification code.

6. The transponder of claim 5 wherein said integrated circuit (54) comprises means (130, G20-G24) for generating plural identification signal transmission frequencies by dividing the frequency of said interrogation signal by plural divisors, and for varying the frequency of transmission of said identification signal responsive to the values of data bits making up said stored identification code.

7. The transponder of claim 6, wherein said integrated circuit (54) further comprises means (128) for defining a bit cell spacing by dividing said interrogation signal, and means (130) for synchronizing variation in the transmission frequency of said identification signal with said bit cells.

8. The transponder of claim 7, wherein said integrated circuit (54) varies the frequency of transmission of said identification signal in the center of said bit cells, the direction of said variation being determined responsive to the value of the individual data bit to be transmitted in one of said cells.

9. The transponder of any one of the preceding claims, wherein the integrated circuit (54) is a CMOS chip.

**Patentansprüche**

1. Antwortgerät (32), welches dazu ausgelegt ist, in ein Tier einspritz-implantiert zu werden und, sobald es implantiert ist, mit einem Abfragegerät (12) induktiv gekoppelt zu werden, welches ein alternierendes Abfragesignal überträgt, mit:

einer Spule (108; 52) zur induktiven Kopplung mit dem Abfragegerät und zum Übertragen eines Identifikationssignals;

einer integrierten Schaltung (54), die mit der Spule verbunden ist; und

einem nicht porösen Verkapselungselement (50), welches geeignet ist, die Spule und die integrierte Schaltung zur Einspritz-Implantierung in ein Tier abzudichten;

wobei die integrierte Schaltung einer Einrichtung (132) zum Speichern eines Identifikationscodes, eine Einrichtung zum Übertragen eines Identifikationssignals im wesentlichen sofort bei Erfassung des Abfragesignals und eine Gleichrichtereinrichtung (110; D1, D2) zum Wandeln des alternierenden Abfragesignals aufweist, welches durch das Abfragegerät übertragen und durch die Spule empfangen ist, und zwar in eine geeignete Form zum Speisen der Schaltung in Verbindung mit der parasitären Kapazität der integrierten Schaltung, wodurch die Übertragung des Identifikationssignals ohne eine diskrete Energiespeichereinrichtung erreicht werden kann.

2. Antwortgerät nach Anspruch 1, wobei die integrierte Schaltung (54) eine Einrichtung (136) zum Erzeugen einer Identifikationssignal-Übertragungsfrequenz durch ganzzahliges Teilen der Frequenz des Abfragesignals aufweist.

3. Antwortgerät nach Anspruch 2, wobei das Verkapselungselement aus Glas ist.

4. Antwortgerät nach Anspruch 2 oder 3, wobei das Verkapselungselement (50) nicht mehr als etwa 12,5 mm (0,5 inches) lang ist und eine Querschittsabmessung von nicht mehr als 6,25 mm$^2$ (0,01 inches$^2$) hat.

5. Antwortgerät nach einem der Ansprüche 1-4, wobei die Spule (108; 52) ausgelegt ist zum Empfangen eines Abfragesignals einer spezifizierten ersten Frequenz und zum Übertragen eines Identifikationssignals mit einer unterschiedlichen zweiten Frequenz; und wobei die integrierte Schaltung (54) ausgelegt ist zum Erzeugen eines Identifikationssignals, und zwar ansprechend auf die Erfassung des Abfragesignals und gemäß dem gespeicherten Identifikationscode.

6. Anwortgerät nach Anspruch 5, wobei die integrierte Schaltung (54) eine Einrichtung (130, G20-G24) aufweist zum Erzeugen einer Vielzahl von Identifikationssignal-Übertragungsfrequenzen durch Teilen der Frequenz des Abfragesignals durch eine Vielzahl von Teilern und zum Verändern der Frequenz der Übertragung des Identifikationssignals, und zwar ansprechend auf die Werte von Datenbits, die den gespeicherten Identifikationscode bilden.

7. Antwortgerät nach Anspruch 6, wobei die integrierte Schaltung (54) weiterhin eine Einrichtung (128) zum Definieren eines Bitzellenabstandes durch Teilen des Abfragesignals und eine Einrichtung (130) zum Synchronisieren einer Veränderung in der Übertragungsfrequenz des Identifikationssignals mit den Bitzellen aufweist.

8. Antwortgerät nach Anspruch 7, wobei die integrierte Schaltung (54) die Frequenz der Übertragung des Identifikationssignals in der Mitte der Bitzellen variiert, wobei die Richtung der Veränderung bestimmt wird in Antwort auf den Wert des individuellen Datenbits, das in eine der Zellen zu übertragen ist.

9. Antwortgerät nach einem der vorhergehenden Ansprüche, wobei die integrierte Schaltung (54) ein CMOS-Chip ist.

**Revendications**

1. Un répondeur (32) implantable dans un animal à l'aide d'une seringue et pouvant, après l'implantation, être couplé inductivement à un interrogateur (12) transmettant un signal d'interrogation alternatif, comprenant:

   une bobine (108; 52) pour couplage inductif à l'interrogateur et pour la transmission d'un signal d'identification;

   un circuit intégré (54) connecté à ladite bobine; ainsi qu'un élément d'encapsulage non poreux (50) permettant un scellage approprié de ladite bobine et du dit circuit intégré en vue de l'implantation dans un animal à l'aide d'une seringue;

   le circuit intégré (54) englobant des moyens (132) pour mémoriser un code d'identification, des moyens de transmission d'un signal d'identification, de façon pratiquement instantanée lors de la détection du signal d'interrogation et des moyens de redressage (110; D1, D2) pour convertir le signal d'interrogation alternatif transmis par ledit interrogateur et reçu par ladite bobine en une forme appropriée à l'alimentation en courant du circuit, en combinaison avec la capacité parasite du circuit intégré, ladite transmission du signal d'identification étant effectuée sans dispositif d'accumulation d'énergie séparé.

2. Le répondeur selon la revendication 1, dans lequel ledit circuit intégré (54) comprend des moyens (136) pour engendrer une fréquence de transmission du signal d'identification en divisant la fréquence du signal d'interrogation par un nombre entier.

3. Le répondeur selon la revendication 2, dans lequel l'élément d'encapsulage est en verre.

4. Le répondeur selon les revendications 2 ou 3, dans lequel ledit élément d'encapsulage (50) a une longueur ne dépassant pas environ 12,5 mm (0,5 pouce) et a une section non supérieure à environ 6,25 mm$^2$ (0,01 pouce carré).

5. Le répondeur selon l'une quelconque des revendications 1 à 4, dans lequel ladite bobine (108; 52) est agencée de sorte à recevoir un signal d'interrogation d'une première fréquence spécifiée et à transmettre un signal d'identification à une deuxième fréquence sensiblement différente; et dans lequel ledit circuit intégré (54) est agencé en vue d'engendrer un signal d'identification lors de la détection du dit signal d'interrogation et correspondant au dit code d'identification mémorisé.

6. Le repondeur selon la revendication 5, dans lequel ledit circuit intégré (54) comprend des moyens (130, G20-G24) pour engendrer plusieurs fréquences de transmission du signal d'identification, en divisant la fréquence du dit signal d'interrogation par plusieurs diviseurs, et pour changer la fréquence de transmission du dit signal d'identification en fonction des valeurs des bits de données constituant ledit code d'identification mémorisé.

7. Le répondeur selon la revendication 6, dans lequel ledit circuit intégré (54) comprend en outre des moyens (128) pour définir un espacement de cellule de bit par division du dit signal d'interrogation ainsi qu'un moyen (130) de synchronisation du dit changement de la fréquence de transmission du dit signal d'identification avec lesdites cellules de bits.

8. Le répondeur selon la revendication 7, dans lequel ledit circuit intégré (54) change la fréquence de transmission du dit signal d'identification au centre des dites cellules de bits, la direction du dit changement étant déterminée en fonction de la valeur des bits de données individuels devant être transmis dans une des dites cellules.

9. Le répondeur selon l'une quelconque des revendications précédentes, dans lequel le circuit intégré (54) est une puce CMOS.

## FIG.1

TIME-STAMP & DATA STORAGE  24

CLOCK  22

REPORT GENERATION  28

STORED DATA  26

10  14  12  16  20

## FIG.2

34  30  32

## FIG.3

40  36  30  32  F

42  38

# FIG.4

# FIG.5

# FIG.6

# FIG.7

56 68 68a

**FIG.8a**

54 52

**FIG.8b**

52

70b 70a 54

72b 72a 72b

**FIG.8c**

54

74

52

**FIG.8d**

52

54

78

78 76

**FIG.8e**

15

## FIG. 9

PREAMBLE    LOW   HIGH    0    1    1    0    0    1    MESSAGE

50 kHz
40 kHz    SIGNAL

BIT CELLS

SYNC    ID DATA

## FIG. 10

RECTIFY, REGULATE

ID MEMORY, FREQUENCY GENERATOR, FSK MODULATOR

SIGNAL +

SIGNAL -

DEMOD → STORAGE → DISPLAY, ANALYZE

CLOCK, 22

EP 0 258 415 B1

# FIG.11B

# FIG.IIA

FIG.12

FIG.13